(19) Europäisches Patentamt
European Patent Office
Office européen des brevets

(11) EP 1 360 735 B1

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(21) Anmeldenummer: **01925306.1**

(22) Anmeldetag: **20.03.2001**

(51) Int Cl.[7]: **H01M 8/18**, H01M 14/00

(86) Internationale Anmeldenummer:
**PCT/DE2001/001081**

(87) Internationale Veröffentlichungsnummer:
**WO 2002/065571 (22.08.2002 Gazette 2002/34)**

(54) **VORRICHTUNG UND VERFAHREN ZUR UMWANDLUNG VOM WÄRME- UND/ODER STRAHLUNGSENERGIE IN ELEKTRISCHE ENERGIE**

DEVICE AND METHOD FOR CONVERTING HEAT AND/OR RADIATION ENERGY INTO ELECTRIC ENERGY

DISPOSITIF ET PROCEDE POUR CONVERTIR DE L'ENERGIE THERMIQUE ET/OU RAYONNANTE EN ENERGIE ELECTRIQUE

(84) Benannte Vertragsstaaten:
**AT BE CH CY DE DK ES FI FR GB GR IE IT LI LU MC NL PT SE TR**

(30) Priorität: **15.02.2001 DE 10106922**

(43) Veröffentlichungstag der Anmeldung:
**12.11.2003 Patentblatt 2003/46**

(73) Patentinhaber: **Henze, Werner**
**D-30916 Isernhagen (DE)**

(72) Erfinder: **Henze, Werner**
**D-30916 Isernhagen (DE)**

(74) Vertreter: **Körner, Peter**
**Thömen & Körner**
**Zeppelinstrasse 5**
**30175 Hannover (DE)**

(56) Entgegenhaltungen:
**DE-A- 1 596 143**
**DE-A- 2 853 441**
**DE-A- 3 241 801**
**US-A- 4 124 741**
**US-A- 6 042 964**

- **DATABASE WPI Section EI, Week 199740 Derwent Publications Ltd., London, GB; Class U14, AN 1997-433712 XP002184976 & RU 2 074 460 C (ENERGIYA ROCKET COSMIC COOP), 27. Februar 1997 (1997-02-27)**
- **PATENT ABSTRACTS OF JAPAN vol. 016, no. 475 (E-1273), 2. Oktober 1992 (1992-10-02) -& JP 04 171670 A (TANAKA KIKINZOKU KOGYO KK;OTHERS: 01), 18. Juni 1992 (1992-06-18)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 360 735 B1

## Beschreibung

Die Erfindung betrifft eine Vorrichtung zur Umwandlung von Wärme- und/oder Strahlungsenergie in elektrische Energie nach Anspruch 1 und ein Verfahren zur Umwandlung von Wärme- und/oder Strahlungsenergie in elektrische Energie nach Anspruch 19.

Zu den bekannten Verfahren, die Wärme- oder Strahlungsenergie in elektrische Energie umwandeln, zählen:

- Kraftwerke und Notstromaggregate, die mittels brennstoffbetriebener Verbrennungsmotoren kinetische Energie erzeugen, die dann mit Elektrogeneratoren in elektrische Energie umgewandelt wird,
- Kraftwerke, die wärmetechnisch Dampfturbinen betreiben, die dann gekoppelt mit Elektrogeneratoren elektrische Energie liefern,
- Solarzellen und Halbleiterphotoelemente, die nur einen kleinen Teil der umwandelbaren Strahlungsenergie in elektrische Energie umsetzen können,
- Brennstoffelemente, bei denen mit Brennstoffen außer Wärme auch elektrische Energie erzeugt wird, oder
- Thermoelemente, die aufgrund unterschiedlich erwärmter Berührungsstellen verschiedener Metalle, elektrische Energie liefern.

Die bekannten Verfahren haben in der Regel einen zu kleinen Wirkungsgrad, der größtenteils durch Wärmeverluste und Verwendung mechanisch bewegter, beispielsweise rotierender Teile bedingt ist.

Der Erfindung liegt die Aufgabe zugrunde, eine Vorrichtung und ein Verfahren zur Umwandlung von Wärme- und/oder Strahlungsenergie in elektrische Energie mit einem höheren Wirkungsgrad bereitzustellen.

Diese Aufgabe wird bei einer Vorrichtung zur Umwandlung von Wärme- und/oder Strahlungsenergie in elektrische Energie mit den Merkmalen des Anspruchs 1 und bei einem Verfahren zur Umwandlung von Wärme- und/oder Strahlungsenergie in elektrische Energie mit den Merkmalen des Anspruchs 19 gelöst. Weiterbildungen und vorteilhafte Ausgestaltungen ergeben sich aus den jeweiligen Unteransprüchen.

Erfindungsgemäß besteht die Vorrichtung zur Umwandlung von Wärme- und/oder Strahlungsenergie in elektrische Energie aus einem nicht geteilten gasdichten Raum der ausschließlich ein Gas oder ein Gasgemisch enthält und wenigstens einer im gasdichten Raum angeordneten elektrochemischen Zelle, die aus Anode und Kathode besteht, zwischen denen sich ein Elektrolyt befindet und mit der Anschlussleitungen verbunden sind. Der gasdichte Raum und die elektrochemische Zelle enthalten ein Gas oder Gasgemisch, dem Energie in Form von Wärme und/oder Strahlung zuführbar ist, wobei das Gas oder Gasgemisch einen molekularen und einen dissoziierten Anteil umfasst, deren Verhältnis von der Temperatur abhängig ist und eine Potentialdifferenz zwischen Anode und Kathode erzeugt.

Ein derartiger Aufbau ermöglicht es der im gasdichten Raum angeordneten elektrochemischen Zelle, kontinuierlich dadurch Strom zu liefern, dass die zu oxidierenden Substanzen und die Oxidationsmittel, welche durch kontinuierliches Zuführen von Wärme- und/oder Strahlungsenergie aus der Dissoziation des im gasdichten Raumes enthaltenen Gases oder Gasgemisches gewonnen werden, kontinuierlich der elektrochemischen Zelle zugeführt werden, und die Oxidationsprodukte kontinuierlich aus der elektrochemischen Zelle in den gasdichten Raum abgeführt werden, wo diese erneut als spaltbares Gas zur Verfügung stehen.

Bei Stromfluss entsteht also ein Kreislaufprozess, bei dem lediglich Energie in Form von Wärme und/oder Strahlung dem System zugeführt wird.

Eine solche Vorrichtung besitzt einen sehr hohen Wirkungsgrad, da die zugeführte Wärme- und/oder Strahlungsenergie in Form chemischer Energie aufgenommen und dann auf elektrochemischen Wege in elektrische Energie umgewandelt wird.

Eine vorteilhafte Ausgestaltung der Erfindung sieht vor, dass der gasdichte Raum Halogenwasserstoff (HX), vorzugsweise Bromwasserstoff (HBr) oder Iodwasserstoff (HI) enthält, der bei Zuführung von Wärme und/oder Strahlung reversibel in Wasserstoff ($H_2$) und Halogen ($X_2$) zerfällt.

Somit bildet Wasserstoff ($H_2$) die zu oxidierende Substanz und das Halogen ($X_2$) das Oxidationsmittel. Beide Edukte werden durch Zuführen von Energie in Form von Wärme und/oder Strahlung aus der reversiblen Spaltung des im gasdichten Raumes enthaltenen Halogenwasserstoffs (HX) gewonnen.

Die dann an den beiden Elektroden der elektrochemischen Zelle ablaufende Gesamtreaktion $H_2 + X_2 \text{-->} 2 HX$ zerfällt in eine Anoden- und eine Kathodenreaktion.

Vorzugsweise umfasst die Kathode ein Material, das als Elektronenakzeptor Halogenmoleküle ($X_2$) teils als $X_2^-$-Anionen und teils als $X_2$-Moleküle zwischen seinen Kristallgitterschichten einlagert, und die Anode ein Material, das Wasserstoff ($H_2$) dissoziativ adsorbiert und dadurch entstandene Wasserstoffatome (H) absorbiert.

Dadurch wird erreicht, dass das Halogen ($X_2$) an der Kathode bei Stromfluss ein Elektron je Atom aufnimmt ($X_2 + 2e^- \text{-->} 2 X^-$, kathodische Reduktion). Anschließend treten die einfach negativ geladenen Halogen-Ionen ($X^-$) von der Kathode aus in den mit ihr in Kontakt stehenden Elektrolyten ein. Der Wasserstoff (2 H) gibt dagegen an der Anode bei Stromfluss ein Elektron je Atom ab ($2 H \text{-->} 2 H^+ + 2 e^-$, anodische Oxidation). Die einfach positiv geladenen

Wasserstoff-Ionen ($H^+$) treten anschließend von der Anode aus in den mit ihr in Kontakt stehenden Elektrolyten ein.

Im Elektrolyten bildet sich schließlich unmittelbar oder mittelbar Halogenwasserstoff ($H^+ + X^- \text{-->} HX$), der in den gasdichten Raum entweicht.

Die Oberflächen der Kathode und der Anode, die mit dem Gas im gasdichten Raum in Berührung stehen, besitzen eine katalytische Wirkung hinsichtlich des Zersetzungsprozesses des Halogenwasserstoffs in unterschiedlicher Art und Weise.

Die katalytische Wirkung der Kathode besteht darin, dass bei Stromfluss $X_2$-Moleküle als $X^-$-Ionen an den Elektrolyten abgegeben und erneut $X_2$-Moleküle aus dem Gasraum in das Kristallgitter der Kathode eingelagert werden.

Da der Zersetzungsgrad des Halogenwasserstoffs eine Funktion der Temperatur ist, muss bei konstant gehaltener Temperatur ein neuer Anteil des Halogenwasserstoffs zerfallen, damit die aus dem Gasraum entnommenen Moleküle ersetzt werden können. Im Fall, dass die Temperatur nicht konstant gehalten wird, also keine Energiezufuhr von außen erfolgt, wird sich die Menge der aus dem Gasraum entnehmbaren $X_2$-Moleküle verringern und damit auch die lieferbare elektrische Energie. Jedoch wird durch die katalytisch wirkende Kathode die Zersetzung des Halogenwasserstoffs bei jeder Temperatur durch die Strombelastung angeregt und die Rekombination gehemmt.

Die katalytische Wirkung der Anode besteht darin, dass Wasserstoffmoleküle ($H_2$) von der Oberfläche der Anode adsorbiert werden und zum Teil in Wasserstoffatome (H) dissoziieren. Abhängig vom Stromfluss wird ein Teil der Wasserstoffatome (H) von der Anode absorbiert und ein anderer Teil wird eine weitere Spaltung von Halogenwasserstoffmolekülen (HX) bewirken. Es wird deshalb auch durch die katalytisch wirkende Anode die Zersetzung des Halogenwasserstoffs angeregt und die Rekombination gehemmt.

Vorzugsweise besteht die Kathode aus Graphit.

Graphit besitzt eine gute elektrische Leitfähigkeit und reagiert mit Halogenmolekülen ($X_2$) zu einer Einlagerungsverbindung, bei der die Moleküle auf elektrochemischen Wege zum Elektrolyten gelangen. Weiterhin ist Graphit chemisch beständig gegenüber Halogen-Molekülen ($X_2$), Säuren und Laugen und besitzt eine erhöhte Temperaturbeständigkeit sowie keine Löslichkeit in Wasser. Außerdem ist Graphit relativ preiswert.

In einer weiteren Ausgestaltung der Erfindung besteht die Anode aus Eisen-(II, III)-Oxid ($Fe_3O_4$).

Eisen-(II,III)-Oxid ($Fe_3O_4$), das auch als Magneteisenstein oder Hammerschlag bezeichnet wird, besitzt gegenüber anderen Oxiden eine gute elektrische Leitfähigkeit, absorbiert aufgrund seiner dissoziativen Adsorption von Wasserstoffmolekülen ($H_2$) an seiner Oberfläche, Wasserstoffatome (H) zur elektrochemischen Weiterleitung an den Elektrolyten und besitzt chemische Beständigkeit gegenüber Halogen-Molekülen ($X_2$), erhöhte Temperaturbeständigkeit und keine Löslichkeit in Wasser. Ferner ist Eisen-(II,III)-Oxid ($Fe_3O_4$) relativ preiswert und wirkt zudem katalytisch.

Statt Eisen-(II,III)-Oxid ($Fe_3O_4$) ist auch Platin (Pt) oder Palladium (Pd) als Anode einsetzbar. Diese Edelmetalle sind jedoch relativ teuer. Andere Metalloxide wie $Cu_2O$, ZnO, $TiO_2$ erfüllen nur zum Teil die an eine katalytisch wirkende Anode gestellten Anforderungen.

Vorteilhaft ist, dass sich die relativ gute elektrische Leitfähigkeit des Eisen-(II,III)-Oxids ($Fe_3O_4$) mit steigender Temperatur noch erhöht.

Zudem kann zur Verbesserung der Leitfähigkeit der Anode zwischen dem Elektrolyten und der aus Eisen-(II, III)-Oxid ($Fe_3O_4$) bestehenden Oberfläche, die dem Gasraum zugewandt ist, eine dünne Graphitschicht oder ein Graphitleitergitter bzw. eine aus Graphit/$Fe_3O_4$-Mischung bestehende Schicht angeordnet sein.

Hinsichtlich der Kristallgitterstruktur ähnelt Eisen-(II,III)-Oxid ($Fe_3O_4$) der von Metallen bevorzugten kubisch dichten Packung von Atomen, die oktaedrische und tetraedrische Lücken aufweisen und deshalb atomaren Wasserstoff (H) absorbieren, also einlagern können. Eisen-(II,III)-Oxid ($Fe_3O_4$) besitzt eine inverse Spinellgitterstruktur mit kubisch dichtester Packung von $O^{2-}$-Ionen und $Fe^{2+}$-Ionen in oktaedrischen, $Fe^{3+}$-Ionen zur Hälfte in tetraedrischen und zur anderen Hälfte in oktaedrischen Lücken. In den verbleibenden Lücken kann atomarer Wasserstoff (H) eingelagert werden. Die Wasserstoffaufnahme kann bei erhöhter Temperatur auch in die oktaedrischen Lücken erfolgen.

Eisen-(II,III)-Oxid ($Fe_3O_4$) hat somit die Eigenschaft Wasserstoff in atomarer Form aufzunehmen.

Vorteilhaft ist, dass eine Reaktion der absorbierten bzw. eingelagerten Wasserstoffatome mit $Fe_3O_4$ erst bei Rotglut (ca. 600 °C) entsprechend der folgenden Reaktionsgleichung stattfindet:

$$Fe_3O_4 + 8\,H \rightarrow 3\,Fe + 4\,H_2O$$

Eine Weiterbildung sieht vor, dass Anode und Kathode eine große Oberfläche aufweisen.

Mit der Vergrößerung der Elektrodenoberflächen erhöht sich außer der Menge der dem gasdichten Raum entnehmbaren zersetzten Gase ($X_2$) und ($H_2$) auch der katalytische Einfluss der Elektroden auf die Zersetzung des Halogenwasserstoffs (HX) im gasdichten Raum.

Eine vorteilhafte Ausgestaltung der Erfindung sieht vor, dass die innerhalb des gasdichten Raumes verlaufenden Anschlussleitungen einen halogenbeständigen elektrischen Leiter, insbesondere Graphit umfassen.

Außerdem ist vorgesehen, dass der gasdichte Raum ein halogenbeständiges Gefäß ist.

Vorzugsweise umfasst das Gefäß eine strahlungsdurchlässige und wärmeisolierende Haube und einen wärmedurchlässigen Boden.

Durch die geringe Wärmeleitfähigkeit der Haube wird weitgehend vermieden, dass durch den Boden zugeführte Wärme- bzw. durch Strahlungsenergie entstandene Wärme an die Umgebung wieder abgegeben wird. Um den Wirkungsgrad der erfindungsgemäßen Vorrichtung zu erhöhen, ist es vorteilhaft, die Umgebung der Zelle so zu gestalten, dass ein Wärmestau entsteht.

Die Haube besteht bevorzugt aus Glas und der Boden aus Glaskeramik.

Eine Weiterbildung der Zelle sieht vor, dass die elektrochemische Zelle von einer Schicht, vorzugsweise aus Polytetrafluorethylen, PTFE ( Handelsname z.B. Teflon), umgeben ist, die gasdurchlässig, halogenbeständig, wasserabstoßend und elektrisch nicht leitend ist.

Durch diese Schicht wird außerdem verhindert, dass der Elektrolyt in den gasdichten Raum gelangt. Je nach der Zusammensetzung des Elektrolyten wird sich in dem abgeschlossenen Gasraum ein Gasdruck in Abhängigkeit der vorhandenen Temperatur einstellen. Besteht der Elektrolyt z.B. aus einem azeotropen Gemisch von Bromwasserstoff (HBr) und Wasser, dann ist bei 124,3 °C ein Gasdruck von 1 bar innerhalb der erfindungsgemäßen Vorrichtung erreicht.

Teflon hat außerdem die Eigenschaft, die Rückbildung des atomaren Wasserstoffs (H) zu Wasserstoff-Molekülen ($H_2$) zu hemmen. Dadurch wird die Aufnahme atomaren Wasserstoffs (H) im Grenzbereich zwischen Teflon- und $Fe_3O_4$-Schicht in die Elektrode gefördert.

Vorteilhaft ist, dass die Temperaturbeständigkeit von Teflon von -270 °C bis +260 °C reicht und Teflon zudem wasserunlöslich ist.

Teilweise ist Teflon durch Silikon ersetzbar, da auch Silikon wasserabstoßend und chemisch beständig ist. Außerdem hemmt es wie Teflon die Rückbildung von atomaren Wasserstoff zu Wasserstoffmolekülen.

Außerdem kann die Oberfläche der Anode aus einer Mischung aus $Fe_3O_4$ und beispielsweise Teflon bestehen.

Vorzugsweise ist der über dem Elektrolyten angeordnete Teil der Teflonschicht für Halogenwasserstoff (HX) durchlässig.

Dadurch wird erreicht, dass die elektrochemische Zelle kontinuierlich Strom erzeugt, weil ihr kontinuierlich das Oxidationsprodukt (HBr) entzogen wird und nur dieses in den gasdichten Raum entweichen kann.

Als Elektrolyt eignet sich ein in Wasser gelöstes Halogenid, insbesondere Aluminiumhalogenid.

Aluminiumhalogenide reagieren mit Wasser äußerst stürmisch nach der Reaktionsgleichung

$$Al_2X_6 + 2\ H_2O \rightarrow 2\ X_3Al\text{-}OH_2 \quad X = \text{z.B. Br od. I}$$

Ist nur wenig Wasser vorhanden, dann stabilisiert sich zunächst der gebildete Komplex durch Halogenwasserstoff-Abspaltung, die zu den Halogeniden $XAl(OH)_2$ bzw. AlOX oder zum Hydroxid bzw. Oxid führt.

$$X_3Al\text{-}OH_2 \rightarrow X_2Al\text{-}OH + HX$$

dieser Vorgang kann sich zweimal wiederholen

$$X_2Al\text{-}OH + H_2O \rightarrow XAl(OH)_2 + HX$$

$$XAl(OH)_2 + H_2O \rightarrow Al(OH)_3 + HX$$

bzw.

$$X_2Al\text{-}OH \rightarrow AlOX + HX$$

$$AlOX + 2\ H_2O \rightarrow Al(OH)_3 + HX$$

Liegt dagegen ein genügend großer Wasserüberschuss vor, dann dissoziieren die kovalenten Halogenide

vollständig in solvatierende Ionen

$$Al_2X_6 + > + 6\ H_2O \rightarrow [Al\ (OH_2)_6]_2X_6$$

Wässrige Aluminiumhalogenidlösungen stellen echte "Salzlösungen" mit elektrolytischer Leitfähigkeit dar. Die Reaktion ist nicht umkehrbar, so dass sich beim Erwärmen Aluminiumhydroxid ($Al(OH)_3$) und Halogenwasserstoff (HX) bildet.

$$[Al(OH_2)_6]_2X_6 - 6\ H_2O \rightarrow 2\ Al(OH)_3 + 6\ HX$$

Als Elektrolyt kann auch ein in Wasser gelöstes Magnesiumhalogenid verwendet werden Die Neigung zur Hydrolyse ist dann allerdings geringer als bei den Aluminiumhalogeniden. Bei Erwärmung entweicht statt Wasser Halogenwasserstoff

$$MgX_2 + H_2O \rightleftarrows Mg(OH)X + HX$$

$$Mg(OH)X + H_2O \rightarrow Mg(OH)_2 + HX$$

Als Elektrolyt ist auch eine Halogensäure wie z.B. Brom- oder Iodsäure verwendbar.

Es ist vorteilhaft ein azeotropisches Gemisch aus Halogenwasserstoff (HX) und Wasser ($H_2O$) zu verwenden, wobei bei der Herstellung der erfindungsgemäßen Vorrichtung dafür gesorgt wird, das sich im gasdichten Raum nur Halogenwasserstoff (HX) befindet. Halogenwasserstoff (HX) liegt dann bezogen auf sein Lösungsvermögen in Wasser ($H_2O$) im Überschuss vor. Da bei Stromfluss Halogenwasserstoff (HX) im Elektrolyten gebildet wird, muss dieser auch wieder in den gasdichten Raum entweichen. Damit stellt sich das Mischungsverhältnis der azeotropen Mischung von selbst wieder ein. Wasser kann deshalb in den Gasraum nicht entweichen. Eine Ummantelung der Zelle mit z.B. einer Teflonschicht ist in diesem Fall nicht erforderlich. Außerdem hätte ein Wasseranteil im gasdichten Raum nur geringe Auswirkungen auf die Leistungsfähigkeit der erfindungsgemäßen Vorrichtung, weil dadurch in geringem Maß die Oberflächen der Elektroden zum Teil auch mit Wasserdampf in Berührung ständen. Allerdings ist die aus Graphit bestehende Kathode wasserabweisend und die aus $Fe_3O_4$ bestehende Oberfläche der Anode wasserunlöslich. Die katalytischen Wirkungen der Elektroden bleiben erhalten. Außerdem ist Wasserdampf z.B. erst bei 1200 °C zu 10-3 % in Wasserstoff und Sauerstoff zerfallen.

In einer Weiterbildung ist der Elektrolyt in den Poren einer Siliciumcarbidscheibe angeordnet.

Diese gewährleistet mechanische Stabilität und dient zusätzlich als Elektrodenträger.

Erfindungsgemäß zeichnet sich das Verfahren zur Umwandlung von Wärme- und/oder Strahlungsenergie nach Anspruch 19 dadurch aus, dass

a) der in dem gasdichten Raum enthaltene Halogenwasserstoff (HX) durch Zuführung von Energie in Form von Wärme und/oder Strahlung reversibel in Wasserstoff ($H_2$) und Halogen ($X_2$) gespalten wird,
b) das Halogen ($X_2$) aus dem gasdichten Raum in das Kristallgitter der Kathode der elektrochemischen Zelle eingelagert und bei Stromfluss ein Elektron je Atom aufgenommen wird ($X_2 + 2\ e^- \rightarrow 2\ X^-$, kathodische Reduktion),
c) die einfach negativ geladenen Halogen-Ionen ($X^-$) von der Kathode aus in den mit ihr in Kontakt stehenden Elektrolyten eintreten,
d) das Wasserstoff-Molekül ($H_2$) von der Anode adsorbiert, dissoziiert und absorbiert wird und bei Stromfluss ein Elektron je Atom abgibt ($2\ H \rightarrow 2\ H^+ + 2\ e^-$, anodische Oxidation) ,
e) die einfach positiv geladenen Wasserstoff-Ionen ($H^+$) von der Anode aus in den mit ihr in Kontakt stehenden Elektrolyten eintreten
f) sich im Elektrolyten unmittelbar oder mittelbar Halogenwasserstoff ($H^+ + X^- \rightarrow HX$) bildet, der in den gasdichten Raum übergeht und
g) sich bei Stromfluss die Schritte a) bis f) wiederholen.

Zur kontinuierlichen Stromerzeugung werden Wasserstoff ($H_2$) und Halogen ($X_2$) der elektrochemischen Zelle kontinuierlich zu- und Halogenwasserstoff (HX) von der elektrochemischen Zelle kontinuierlich abgeführt.

Eine Weiterbildung sieht vor, dass dem gasdichten Raum kontinuierlich Energie in Form von Wärme und/ oder Strahlung zugeführt wird, um einen bestimmten Gleichgewichtszustand aufrechtzuerhalten.

Außerdem ist vorgesehen, dass als Halogenwasserstoff (HX) Bromwasserstoff (HBr) oder Iodwasserstoff (HI) verwendet werden.

Vorzugsweise wird als gasdichter Raum ein halogenbeständiges Gefäß verwendet, über dessen Wände Wärme- und/oder Strahlungsenergie zugeführt wird.

In einer Weiterbildung besteht das Gefäß aus einer strahlungsdurchlässigen und wärmeisolierenden Haube und einem wärmedurchlässigen Boden, wobei über die Haube hauptsächlich Strahlungsenergie und über den Boden Wärmeenergie zugeführt wird.

Nachfolgend wird die Erfindung anhand eines Ausführungsbeispiels erläutert, das in der Zeichnung dargestellt ist. In dieser zeigen:

Fig. 1 eine schematische Darstellung der erfindungsgemäßen Vorrichtung,

Fig. 2 den Spaltungsprozess für Bromwasserstoff (HBr) innerhalb des gasdichten Raumes der erfindungsgemäßen Vorrichtung und

Fig. 3 die Bildung von Bromwasserstoff (HBr) im Elektrolyten der erfindungsgemäßen Vorrichtung.

In Fig.1 ist der Aufbau einer Vorrichtung zur Umwandlung von Wärme- und/oder Strahlungsenergie (Δ, hν) in elektrische Energie dargestellt.

Die elektrochemische Zelle 12 umfasst eine Anode 14, einen Elektrolyten 18 sowie eine Kathode 16 und ist in einem gasdichten, halogenbeständigen Gefäß angeordnet, das aus einer strahlungsdurchlässigen und wärmeisolierenden Haube 22 und einem wärmedurchlässigen Boden 24 besteht.

Anode 14 und Kathode 16 sind zum Erreichen eines Stromflusses über einen Widerstand mit Anschlussleitungen 20 verbindbar.

Die Haube 22 des Gefäßes kann aus Glas und der Boden 24 des Gefäßes aus Glaskeramik bestehen, wobei über die Haube 22 hauptsächlich Strahlungsenergie (hν) und über den Boden 24 Wärmeenergie (Δ) zugeführt wird.

Die dem gasdichten Raum 10 zugeführte Wärme- und/oder Strahlungsenergie (Δ, hν) bewirkt, dass der im gasdichten Raum 10 enthaltene Halogenwasserstoff (HX) reversibel in Wasserstoff ($H_2$) und Halogen ($X_2$) gespalten wird.

Da die Reaktion umkehrbar ist und nach beiden Richtungen verlaufen kann, stellt sich in dem gasdichten Raum 10 zwischen Halogen ($X_2$), Wasserstoff ($H_2$) und Halogenwasserstoff (HX) bei jeder Temperatur ein bestimmtes Gleichgewicht ein.

Die im Gefäß angeordnete elektrochemische Zelle 12 ist von einer Schicht 26, vorzugsweise aus Teflon (PTFE), umgeben, die gasdurchlässig, halogenbeständig, wasserabstoßend, elektrisch nicht leitend ist und den Elektrolyten 18 vom gasdichten Raum 10 trennt.

Die Umwandlung von Wärme- und/oder Strahlungsenergie (Δ, hν) in elektrische Energie beginnt mit der Spaltung von Halogenwasserstoff (HX) in Wasserstoff ($H_2$) und Halogen ($X_2$) durch Zuführen von Energie in Form von Wärme (Δ) und/oder Strahlung (hν).

Der molare Energiebetrag, der mindestens zur Spaltung aufgewendet werden muss, ist in den nachfolgenden Reaktionsgleichungen beispielhaft für Bromwasserstoff (HBr) und Iodwasserstoff (HI) angegeben:

$$2\ HBr + 103{,}8\ kJ \xrightleftharpoons{\Delta,\ h\nu} H_2 + Br_2$$

$$2\ HI + 9{,}46\ kJ \xrightleftharpoons{\Delta,\ h\nu} H_2 + I_2$$

Bei diesen Reaktionen stellt sich in einen gasdichten Gefäß ein temperaturabhängiger Gleichgewichtszustand zwischen Zersetzung und Rekombination der Halogenwasserstoff-Moleküle (HX) ein.

Beispielsweise sind bei 300 °C stets 19 % und bei 1000 °C stets 33% der Iodwasserstoff-Moleküle (HI) gespalten. Mit steigender Temperatur nimmt der Anteil an gespaltenen Halogenwasserstoff-Molekülen (HX) zu.

Der gespaltene Anteil des Halogenwasserstoffs (HX) wird zur elektrochemischen Umwandlung in elektrische Energie genutzt und sollte deshalb möglichst groß sein.

Das kann erreicht werden, indem der Halogenwasserstoff (HX) beispielsweise einer Strahlung (hν) ausgesetzt wird und/oder mit katalytisch wirkenden Elektrodenoberflächen in Berührung steht. In jedem Fall wird so der Zerfallsprozess des Halogenwasserstoffs (HX) gegenüber der Rekombination begünstigt und somit der Zerfallsgrad bezogen auf die Temperatur erhöht. Es kann so erreicht werden, dass die erfindungsgemäße Vorrichtung bereits bei Raumtemperatur bei geringer Energiezufuhr zu arbeiten beginnt.

Im Falle der Iodwasserstoff-Moleküle (HI) erfolgt bereits eine Spaltung (Photodissoziation) bei 140 °C, wenn diese mit einer Lichtwellenlänge von 578 nm (grün/gelb) bestrahlt werden, die eine Spaltung der Iodmoleküle ($I_2$) bewirkt ($I_2 \rightarrow 2\ I$). Im allgemeinen reichen die Quanten des sichtbaren Lichts nur für solche Vorgänge aus, deren molarer Umsatz nicht mehr als 300 kJ an freier Energie erfordert. Strahlungsenergie (hν) lässt sich außerdem sehr leicht in Wärmeenergie (Δ) umwandeln, so dass sie in jedem Fall optimal genutzt werden kann.

Die dem gasdichten Raum 10 zugewandte Seite der Anode 14 grenzt direkt an die Schicht 26.

Die Elektroden 14, 16 werden elektrochemisch als Gaselektroden benutzt, wobei die Anode 14 eine Wasserstoffelektrode und die Kathode 16 eine Halogenelektrode darstellt. Dementsprechend bildet die Anode 14 den Minuspol und die Kathode 16 den Pluspol.

Durch die Verwendung geeigneter unterschiedlicher Materialien für die Elektroden 14, 16 ist gewährleistet, dass die Zersetzungsprodukte Wasserstoff ($H_2$) und Halogen ($X_2$) des im gasdichten Raum 10 befindlichen Halogenwasserstoffs (HX) getrennt dem Elektrolyten zugeführt werden.

Das Halogen ($X_2$) nimmt an der Kathode 16 bei Stromfluss ein Elektron je Atom auf ($X_2 + 2e^-$ --> $2\ X^-$, kathodische Reduktion). Anschließend treten die einfach negativ geladenen Halogen-Ionen ($X^-$) von der Kathode 16 aus in den mit ihr in Kontakt stehenden Elektrolyten 18 ein. Der Wasserstoff (2 H) gibt dagegen an der Anode 14 bei Stromfluss ein Elektron je Atom ab (2 H --> $2\ H^+ + 2\ e^-$, anodische Oxidation). Die einfach positiv geladenen Wasserstoff-Ionen ($H^+$) treten anschließend von der Anode 14 aus in den mit ihr in Kontakt stehenden Elektrolyten 18 ein.

Im Elektrolyten 18 bildet sich schließlich Halogenwasserstoff ($H^+ + X^-$ --> HX), der in den gasdichten Raum 10 entweicht.

Fig.2 zeigt die im gasdichten Raum 10 durch Zuführung von Wärme- und/oder Strahlungsenergie (Δ, hν) hervorgerufene Spaltung von Bromwasserstoff (HBr).

Ausgehend von der Spaltung eines Wasserstoffmoleküls ($H_2$) wird mit dem entstandenen atomaren Wasserstoffatomen (2 H) zunächst Bromwasserstoff (HBr) in Wasserstoff ($H_2$) und Brom (Br) gespalten. Diese Reaktion ist reversibel.

Weiterhin ist dargestellt, wie der Spaltungsprozess des Bromwasserstoffs (HBr) unter Energiezufuhr (Δ, hν) durch wiederholte Spaltung des Zersetzungsproduktes Wasserstoff ($H_2$) aufrechterhalten wird.

Allerdings stellt sich bei jeder erreichten Temperatur durch die Rekombination nach der Reaktionsgleichung

$$H + Br_2 \rightarrow HBr + Br + 173{,}50\ kJ$$

ein Gleichgewichtszustand ein, bei dem ein ganz bestimmter Anteil des Bromwasserstoffs (HBr) gespalten ist.

Der molare Energiebetrag, der mindestens zur Spaltung aufgewendet werden muss, beträgt bei Bromwasserstoff ( HBr) 103,83 kJ.

Gemäß dem Massenwirkungsgesetz bleibt dieser Zustand erhalten, solange keine Energiezufuhr, Wärmeableitung, Entzug der Spaltungsprodukte Wasserstoff ($H_2$) oder Halogen ($X_2$) oder Reduzierung des Bromwasserstoffanteils erfolgt.

Da aber durch den in Fig. 3 dargestellten elektrochemischen Prozess bei Stromfluss dem gasdichten Raum 10 ständig die Spaltungsprodukte Wasserstoff ($H_2$)und Brom ($Br_2$) entzogen werden und Bromwasserstoff (HBr) wieder zugeführt wird, muss dem gasdichten Raum 10 ständig Energie (Δ, hν) zugeführt werden, um einen bestimmten Gleichgewichtszustand bei einer konstanten Temperatur aufrechtzuerhalten.

Fig.3 zeigt die Bildung von Bromwasserstoff (HBr) im Elektrolyten 18. Der Elektrolyt 18 ist eine wässrige Aluminiumbromidlösung, aus der der gebildete Bromwasserstoff (HBr) in den in Fig.1 dargestellten gasdichten Raum 10 entweichen kann.

Der Wasseranteil im Elektrolyten 18 ist so groß gewählt, dass gerade eben ein genügend großer Wasserüberschuss vorhanden ist.

Bei Unterschreitung dieser Wasseranteilsgrenze wird entsprechend viel Aluminiumhydroxid ($Al(OH)_3$) gebildet und der zugehörige Anteil Bromwasserstoff (HBr) entweicht in den gasdichten Raum 10. Bei Überschreitung wird Bromwasserstoff (HBr) im überschüssigen Wasseranteil zum Teil gelöst.

Es muss also davon ausgegangen werden, dass an dem Prozess solvatierende Ionen des Aluminiumhalogenids als auch die Ionen des Aluminiumhydroxids beteiligt sind.

Da der Wasseranteil im Elektrolyten 18 konstant bleibt und sich auch nicht die Konzentration des gelösten Aluminiumbromids ($AlBr_3$) sowie des Aluminiumhydroxids ($Al(OH)_3$) ändert, wird der elektrochemisch gebildete Bromwasserstoff (HBr) wieder in den gasdichten Raum 10 entweichen.

Dazu ist der in Fig.1 dargestellte Teil 28 der Schicht 26 über dem Elektrolyten 18 für Halogenwasserstoff (HX)

durchlässig.

Sobald über die Anschlussleitungen 20 elektrische Energie entnommen wird und somit Strom fließt, wird dem gasdichten Raum 10 Wasserstoff ($H_2$) und Halogen ($X_2$) entzogen und der elektrochemischen Zelle 12 zugeführt. Als Produkt wird im Elektrolyten 18 Halogenwasserstoff (HX) gebildet, der dann in den gasdichten Raum 10 übergeht und dort erneut durch Zuführung von Energie in Form von Wärme (Δ) und/oder Strahlung (hν) in Wasserstoff ($H_2$) und Halogen ($X_2$) zersetzt wird.

Es existiert also ein geschlossener Kreislauf des Halogenwasserstoffs (HX), wodurch Wärme- und Strahlungsenergie (Δ, hν) mit hohem Wirkungsgrad in elektrische Energie umgewandelt wird. Wärmeenergieverluste, die beispielsweise auf den Innenwiderstand der elektrochemischen Zelle zurückführbar sein könnten, wird es nicht geben, weil jeder Wärmeenergiebeitrag die Temperatur erhöht und damit der Zersetzungsgrad des Halogenwasserstoffs (HX) im gasdichten Raum 10 steigt.

Die an den Anschlussleitungen 20 anstehende Klemmenspannung beträgt nominal im Fall der Verwendung von Brom als Halogen bei einem sauren Elektrolyten, wie z.B. Bromsäure oder in Wasser gelöstes Aluminiumbromid, 1,06 V und bei einem sauren Iodelektrolyten 0,53 V.

## Patentansprüche

1. Vorrichtung zur Umwandlung von Wärme- und/oder Strablungsenergie (Δ, hν) in elektrische Energie bestehend aus einem nicht geteilten gasdichten Raum (10), der ausschließlich ein Gas oder ein Gasgemisch enthält, und wenigstens einer im gasdichten Raum (10) angeordneten elektrochemischen Zelle (12), die aus Anode (14) und Kathode (16) besteht, zwischen denen sich ein Elektrolyt (18) befindet und mit der Anschlussleitungen (20) verbunden sind, wobei der gasdichte Raum (10) und die elektrochemische Zelle (12) ein Gas oder Gasgemisch enthalten, dem Energie in Form von Wärme (Δ) und/oder Strahlung (hν) zuführbar ist, und wobei das Gas oder Gasgemisch einen molekularen und einen dissoziierten Anteil umfasst, deren Verhältnis von der Temperatur abhängig ist und eine Potentialdifferenz zwischen Anode (14) und Kathode (16) erzeugt.

2. Vorrichtung nach Anspruch 1, **dadurch gekennzeichnet, dass** der gasdichte Raum (10) Halogenwasserstoff (HX), vorzugsweise Bromwasserstoff (HBr) oder Iodwasserstoff (HI), enthält, der bei Zuführung von Wärme (Δ) und/oder Strahlung (hv) reversibel in Wasserstoff ($H_2$) und Halogen ($X_2$) zerfällt.

3. Vorrichtung nach Anspruch 1 oder 2, **dadurch gekennzeichnet, dass** die Kathode (16) ein Material umfasst, das Halogen ($X_2$) ionisch bindet und in sein Kristallgitter einlagert, und die Anode (14) ein Material umfasst, das Wasserstoff ($H_2$, H) ad- und absorbiert.

4. Vorrichtung nach Anspruch 2 oder 3, **dadurch gekennzeichnet, dass** der Wasserstoff ($H_2$) an der Oberfläche der Anode (14) durch dissoziative Adsorption spaltbar ist.

5. Vorrichtung nach Anspruch 4, **dadurch gekennzeichnet, dass** ein Katalysator vorgesehen ist, der die Rückbildung von entstandenen atomaren Wasserstoff (H) zu Wasserstoffmolekülen ($H_2$) hemmt.

6. Vorrichtung nach einem der Ansprüche 1 bis 5, **dadurch gekennzeichnet, dass** Kathode (16) und Anode (14) dünnschichtig ausgelegt sind.

7. Vorrichtung nach einem der Ansprüche 1 bis 6, **dadurch gekennzeichnet, dass** die Kathode (16) Graphit umfasst.

8. Vorrichtung nach einem der Ansprüche 1 bis 7, **dadurch gekennzeichnet, dass** die Anode (14) Eisen-(II,III)-Oxid ($Fe_3O_4$), Platin (Pt) oder Palladium (Pd) umfasst.

9. Vorrichtung nach einem der Ansprüche 1 bis 8, **dadurch gekennzeichnet, dass** Anode (14) und Kathode (16) eine große Oberfläche aufweisen.

10. Vorrichtung nach einem der Ansprüche 1 bis 9, **dadurch gekennzeichnet, dass** die innerhalb des gasdichten Raumes (10) verlaufenden Anschlussleitungen (20) einen halogenbeständigen elektrischen Leiter, insbesondere Graphit umfassen.

11. Vorrichtung nach einem der Ansprüche 1 bis 10, **dadurch gekennzeichnet, dass** der gasdichte Raum (10) ein halogenbeständiges Gefäß ist.

**12.** Vorrichtung nach Anspruch 11, **dadurch gekennzeichnet, dass** das Gefäß eine strahlungsdurchlässige und wärmeisolierende Haube (22) und einen wärmedurchlässigen Boden (24) umfasst.

**13.** Vorrichtung nach Anspruch 13, **dadurch gekennzeichnet, dass** die Haube (22) aus Glas und der Boden (24) aus Glaskeramik besteht.

**14.** Vorrichtung nach einem der Ansprüche 1 bis 13, **dadurch gekennzeichnet, dass** die elektrochemische Zelle (12) von einer Schicht (26), insbesondere aus Teflon, umgeben ist, die gasdurchlässig, halogenbeständig, wasserabstoßend und elektrisch nicht leitend ist.

**15.** Vorrichtung nach Anspruch 14, **dadurch gekennzeichnet, dass** der über dem Elektrolyten (18) angeordnete Teil (28) der Schicht (26) für Halogenwasserstoff (HX) durchlässig ist

**16.** Vorrichtung nach einem der Ansprüche 1 bis 15, **dadurch gekennzeichnet, dass** der Elektrolyt (18) ein in Wasser ($H_2O$) gelöstes Halogenid, insbesondere Aluminiumhalogenid ($AlBr_3$), umfasst.

**17.** Vorrichtung nach einem der Ansprüche 1 bis 16, **dadurch gekennzeichnet, dass** der Elektrolyt (18) aus einer azeotropen Mischung aus Halogenwasserstoff (HX) und Wasser ($H_2O$) besteht.

**18.** Vorrichtung nach einem der Ansprüche 1 bis 17, **dadurch gekennzeichnet, dass** der Elektrolyt (18) in den Poren eines halogenbeständigen Materials, insbesondere einer Siliciumcarbidscheibe angeordnet ist.

**19.** Verfahren zur Umwandlung von Wärme- und/oder Strahlungsenergie in elektrische Energie, **dadurch gekennzeichnet, dass**

a) ein in einem gasdichten Raum (10) enthaltener Halogenwasserstoff (HX) durch Zuführung von Energie in Form von Wärme ($\Delta$) und/oder Strahlung ($h\nu$) reversibel in Wasserstoff ($H_2$) und Halogen ($X_2$) gespalten wird,
b) das Halogen ($X_2$) von der Kathode (16) einer im gasdichten Raum (10) angeordneten elektrochemischen Zelle (12) eingelagert wird und bei Stromfluss ein Elektron je Atom aufnimmt ($X_2 + 2e^- \rightarrow 2\ X^-$, kathodische Reduktion),
c) die einfach negativ geladenen Halogen-Ionen ($X^-$) von der Kathode (16) aus in den mit ihr in Kontakt stehenden Elektrolyten (18) eintreten,
d) das Wasserstoff-Molekül ($H_2$) von der Anode (14) adsorbiert, dissoziiert und absorbiert wird und bei Stromfluss ein Elektron je Atom abgibt ($2\ H \rightarrow 2\ H^+ + 2\ e^-$, anodische Oxidation),
e) die einfach positiv geladenen Wasserstoff-Ionen ($H^+$) von der Anode (14) aus in den mit ihr in Kontakt stehenden Elektrolyten (18) eintreten,
f) sich im Elektrolyten (18) unmittelbar oder mittelbar Halogenwasserstoff (HX) bildet, der in den gasdichten Raum (10) übergeht und
g) sich bei Stromfluss die Schritte a) bis f) wiederholen.

**20.** Verfahren nach Anspruch 19, **dadurch gekennzeichnet, dass** Wasserstoff ($H_2$) und Halogen ($X_2$) der elektrochemischen Zelle (12) kontinuierlich zu- und Halogenwasserstoff (HX) von der elektrochemischen Zelle (12) kontinuierlich abgeführt werden

**21.** Verfahren nach Anspruch 19 oder 20, **dadurch gekennzeichnet, dass** dem gasdichten Raum (10) kontinuierlich Energie in Form von Wärme ($\Delta$) und/oder Strahlung ($h\nu$) zugeführt wird, um einen bestimmten Gleichgewichtszustand aufrechtzuerhalten.

**22.** Verfahren nach einem der Ansprüche 19 bis 21, **dadurch gekennzeichnet, dass** als Halogenwasserstoff (HX) Bromwasserstoff (HBr) oder Iodwasserstoff (HI) verwendet werden.

**23.** Verfahren nach einem der Ansprüche 19 bis 22, **dadurch gekennzeichnet, dass** im Elektrolyt (18) gebildeter Halogenwasserstoff (HX) aus dem Elektrolyt (18) in den gasdichten Raum (10) übergeht, weil er Elektrolyten (18) nicht lösbar ist.

**24.** Verfahren nach einem der Ansprüche 19 bis 23, **dadurch gekennzeichnet, dass** als gasdichter Raum (10) ein halogenbeständiges Gefäß verwendet wird, über dessen Wände Wärmeund/oder Strahlungsenergie ($\Delta$, $h\nu$) zugeführt wird.

**25.** Verfahren nach Anspruch 24, **dadurch gekennzeichnet, dass** das Gefäß aus einer strahlungsdurchlässigen und wärmeisolierenden Haube (22) und einem wärmedurchlässigen Boden (24) besteht, wobei über die Haube (22) hauptsächlich Strahlungsenergie (hν) und über den Boden ( 24) Wärmeenergie (Δ) zugeführt wird.

**26.** Verfahren nach Anspruch 24 oder 25, **dadurch gekennzeichnet, dass** die Umgebung des Gefäßes durch einen Aufbau so gestaltet wird, dass ein Wärmestau entsteht.

## Claims

**1.** Apparatus for converting thermal and/or radiant energy (Δ, hν) into electrical energy comprising an undivided, gastight chamber (10), which exclusively contains a gas or gas mixture, and at least one electrochemical cell (12) located in the gastight chamber (10) and which comprises an anode (14) and a cathode (16), between which is located an electrolyte (18) and which are connected to the connecting leads (20), the gastight chamber (10) and the electrochemical cell (12) contain a gas or gas mixture to which can be supplied energy in the form of heat (Δ) and/or radiation (hν) and in which the gas or gas mixture comprises a molecular component and a dissociated component, whose ratio is dependent on the temperature and produces a potential difference between anode (14) and cathode (16).

**2.** The device according to Claim 1, **characterized in that** the gas-tight chamber (10) contains hydrogen halide (HX), preferably hydrogen bromide (HBr) or hydrogen iodide (HI), which reversibly decomposes into hydrogen ($H_2$) and halogen ($X_2$) when energy is supplied in the form of heat (Δ) and/or radiation (hν).

**3.** The device according to Claim 1 or 2, **characterized in that** the cathode (16) includes a material which ionically binds halogen ($X_2$) and intercalates it in its crystal lattice, and the anode (14) includes a material which adsorbs and absorbs hydrogen ($H_2$, H).

**4.** The device according to Claim 2 or 3, **characterized in that** the hydrogen ($H_2$) may be cleaved on the surface of the anode (14) through dissociative adsorption.

**5.** The device according to Claim 4, **characterized in that** a catalyst is provided which inhibits the reformation of the resulting atomic hydrogen (H) into hydrogen molecules ($H_2$).

**6.** The device according to one of Claims 1 to 5, **characterized in that** the cathode (16) and anode (14) are designed as thin-film.

**7.** The device according to one of Claims 1 to 6, **characterized in that** the cathode (16) includes graphite.

**8.** The device according to one of Claims 1 to 7, **characterized in that** the anode (14) includes iron (II, III) oxide ($Fe_3O_4$), platinum (Pt), or palladium (Pd).

**9.** The device according to one of Claims 1 to 8, **characterized in that** the anode (14) and cathode (16) have large surfaces.

**10.** The device according to one of Claims 1 to 9, **characterized in that** the connection lines (20) running inside the gas-tight chamber (10) include a halogen-resistant electrical conductor, particularly graphite.

**11.** The device according to one of Claims 1 to 10, **characterized in that** the gas-tight chamber (10) is a halogen-resistant vessel.

**12.** The device according to Claim 11, **characterized in that** the vessel includes a radiation-transparent and thermally-insulated hood (22) and a heat-transparent floor (24).

**13.** The device according to Claim 12, **characterized in that** the hood (22) is made of glass and the floor (24) is made of glass ceramic.

**14.** The device according to one of Claims 1 to 13, **characterized in that** the electrochemical cell (12) is enclosed by a film (26), particularly made of Teflon, which is gas-permeable, halogen-resistant, water-repellent, and electrically

non-conductive.

**15.** The device according to Claim 14, **characterized in that** the part (28) of the film (26) positioned over the electrolyte (18) is permeable to hydrogen halide (HX).

**16.** The device according to one of Claims 1 to 15, **characterized in that** the electrolyte (18) includes a halogenide dissolved in water ($H_2O$), particularly aluminum halogenide ($AlBr_3$).

**17.** The device according to one of Claims 1 to 16, **characterized in that** the electrolyte (18) is made of an azeotropic mixture of hydrogen halide (HX) and water ($H_2O$).

**18.** The device according to one of Claims 1 to 17, **characterized in that** the electrolyte (18) is positioned in the pores of a halogen-resistant material, particularly a silicon carbide disk.

**19.** A method of converting heat and/or radiation energy into electrical energy, **characterized in that**

a) a hydrogen halide (HX) contained in a gas-tight chamber (10) is reversibly cleaved into hydrogen ($H_2$) and halogen ($X_2$) by supplying energy in the form of heat ($\Delta$) and/or radiation ($h\nu$),
b) the halogen ($X_2$) is intercalated in the cathode (16) of an electrochemical cell (12) positioned in the gas-tight chamber (10) and accepts one electron per atom in the event of current flow ($X_2 + 2e^- \rightarrow 2X^-$, cathodic reduction),
c) the halogen ions ($X^-$), which carry one negative charge, enter the electrolyte (18) from the cathode (16), which is in contact therewith,
d) the hydrogen molecules ($H_2$) are adsorbed, dissociated, and absorbed by the anode (14) and, in the event of current flow, give up one electron per atom ($2\ H \rightarrow 2H^+ + 2e^-$, anodic oxidation),
e) the hydrogen ions ($H^+$), which carry one positive charge, enter the electrolyte (18) from the anode (14), which is in contact therewith,
f) hydrogen halide (HX), which then passes into the gas-tight chamber (10), forms directly or indirectly in the electrolyte (18), and
g) the steps a) to f) repeat in the event of current flow.

**20.** The method according to Claim 19, **characterized in that** hydrogen ($H_2$) and halogen ($X_2$) are continuously supplied to the electrochemical cell (12) and hydrogen halide (HX) is continuously removed from the electrochemical cell (12).

**21.** The method according to Claim 19 or 20, **characterized in that** energy in the form of heat ($\Delta$) and/or radiation ($h\nu$) is continuously supplied to the gas-tight chamber (10), in order to maintain a specific equilibrium state.

**22.** The method according to one of Claims 19 to 21, **characterized in that** hydrogen bromide (HBr) or hydrogen iodide (HI) are used as the hydrogen halide (HX).

**23.** The method according to one of Claims 19 to 22, **characterized in that** hydrogen halide (HX) formed in the electrolyte (18) passes into the gas-tight chamber (10) from the electrolyte (18) because it is not soluble in the electrolyte (18).

**24.** The method according to one of Claims 19 to 23, **characterized in that** a halogen-resistant vessel is used as the gas-tight chamber (10), via whose walls heat and/or radiation energy ($\Delta$, $h\nu$) is supplied.

**25.** The method according to Claim 24, **characterized in that** the vessel includes a radiation-transparent and thermally-insulated hood (22) and a heat-transparent floor (24), radiation energy ($h\nu$) mainly being supplied via the hood (22) and heat energy ($\Delta$) mainly being supplied via the floor (24).

**26.** The method according to Claim 24 or 25, **characterized in that** the surroundings of the vessel are designed so that an accumulation of heat results.

## Revendications

1. Dispositif de transformation d'énergie calorifique et/ou rayonnante (Δ, hv) en énergie électrique comprenant un compartiment non divisé, étanche au gaz (10), qui contient exclusivement un gaz ou un mélange de gaz, et au moins une cellule électrochimique (12), disposée dans le compartiment étanche au gaz (10), qui est constituée d'une anode (14) et d'une cathode (16), entre lesquelles se trouve un électrolyte (18), et à laquelle sont reliées des conduites de raccordement (20), le compartiment étanche au gaz (10) et la cellule électrochimique (12) contenant un gaz ou un mélange de gaz, auquel de l'énergie peut être apportée sous forme de chaleur (Δ) et/ou de rayonnement (hv), le gaz ou le mélange de gaz comprenant une partie moléculaire et une partie dissociée, dont la proportion dépend de la température et génère une différence de potentiel entre l'anode (14) et la cathode (16).

2. Dispositif suivant la revendication 1, **caractérisé en ce que** le compartiment étanche au gaz (10) contient de l'hydracide (HX), de préférence de la bromure d'hydrogène (HBr) ou de l'iodure d'hydrogène (HI), qui se dissocie sous apport de chaleur (Δ) et/ou de rayonnement (hv) en hydrogène (H2) et halogène (X2) de façon réversible.

3. Dispositif suivant la revendication 1 ou 2, **caractérisé en ce que** la cathode (16) comprend une matière qui entraîne une liaison ionique de l'halogène (X2) qu'elle stocke dans son réseau cristallin, et **en ce que** l'anode (14) comprend une matière qui adsorbe et absorbe l'hydrogène (H2, H).

4. Dispositif suivant la revendication 2 ou 3, **caractérisé en ce que** l'hydrogène (H2) peut être divisé à la surface de l'anode (14) par adsorption dissociative.

5. Dispositif suivant la revendication 4, **caractérisé en ce qu'**un catalyseur est prévu, qui inhibe la régénération en molécules d'hydrogène (H2) de l'hydrogène atomique (H) produit.

6. Dispositif suivant une des revendications 1 à 5, **caractérisé en ce que** la cathode (16) et l'anode (14) présentent une conception à couche mince.

7. Dispositif suivant une des revendications 1 à 6, **caractérisé en ce que** la cathode (16) comprend du graphite.

8. Dispositif suivant une des revendications 1 à 7, **caractérisé en ce que** l'anode (14) comprend de l'oxyde de fer (II, III) ($Fe_3O_4$), du platine (Pt) ou du palladium (Pd).

9. Dispositif suivant une des revendications 1 à 8, **caractérisé en ce que** l'anode (14) et la cathode (16) présentent une grande surface.

10. Dispositif suivant une des revendications 1 à 9, **caractérisé en ce que** les conduites de raccordement (20) s'étendant à l'intérieur du compartiment étanche au gaz (10) comprennent un conducteur électrique résistant à l'halogène, en particulier du graphite.

11. Dispositif suivant une des revendications 1 à 10, **caractérisé en ce que** le compartiment étanche au gaz (10) est un récipient résistant à l'halogène.

12. Dispositif suivant la revendication 11, **caractérisé en ce que** le récipient comprend un couvercle transparent au rayonnement et calorifuge, ainsi qu'un fond qui laisse passer la chaleur (24).

13. Dispositif suivant la revendication 13, **caractérisé en ce que** le couvercle (22) est en verre et le fond (24) en vitrocéramique.

14. Dispositif suivant une des revendications 1 à 13, **caractérisé en ce que** la cellule électrochimique est entourée par une couche (26), en particulier en téflon, qui est perméable au gaz, qui résiste à l'halogène, qui est hydrophobe et électriquement non conducteur.

15. Dispositif suivant la revendication 14, **caractérisé en ce que** la partie (28), disposée au-dessus de l'électrolyte (18), de la couche (26) est perméable à l'hydracide (HX).

16. Dispositif suivant une des revendications 1 à 5, **caractérisé en ce que** l'électrolyte (18) comprend une halogénure dissolue dans l'eau ($H_2O$), en particulier de l'halogénure d'aluminium ($AlBr_3$).

**17.** Dispositif suivant une des revendications 1 à 16, **caractérisé en ce que** l'électrolyte (18) est constitué d'un mélange azéotrope d'hydracide (HX) et d'eau ($H_2O$).

**18.** Dispositif suivant une des revendications 1 à 17, **caractérisé en ce que** l'électrolyte (18) est disposé dans les pores d'une matière résistante à l'halogène, en particulier d'un disque de carbure de silicium.

**19.** Procédé de transformation de chaleur et/ou de rayonnement en énergie électrique,
**caractérisé en ce qu'**

a) un hydracide (HX) contenu dans un compartiment étanche au gaz (10) est dissocié de manière réversible en hydrogène ($H_2$) et halogène ($X_2$) par apport d'énergie sous forme de chaleur ($\Delta$) et/ou de rayonnement (hv).

b) l'halogène ($X_2$) de la cathode (16) est stocké dans une cellule électromécanique (12) disposée dans le compartiment étanche au gaz (10) et absorbe respectivement un électron par atome ($X_2$+2e- -> 2 X, réaction cathodique) à flux de courant,

c) les ions d'halogène à charge élémentaire négative (X") entrent depuis la cathode (16) dans l'électrolyte (18) en contact avec celle-ci,

d) la molécule d'hydrogène ($H_2$) est adsorbée, dissociée et absorbée par l'anode (14) et dégage, à flux de courant, un électron par atome (2 H $\rightarrow$ 2 H+ + 2$^{e,,}$, oxydation anodique),

e) les ions d'hydrogène ($H^+$) à charge élémentaire positive entrent depuis l'anode (14) dans l'électrolyte (18) en contact avec celle-ci.

f) de l'hydracide (HX) est produit indirectement ou directement dans l'électrolyte (18) et passe dans le compartiment étanche au gaz (10) et

g) à flux de courant, les étapes se répètent de a) à f).

**20.** Procédé suivant la revendication 19, **caractérisé en ce que** l'hydrogène ($H_2$) et l'halogène ($X_2$) sont apportés continuellement à la cellule électrochimique (12) et **en ce que** l'hydracide (HX) est continuellement évacué de la cellule électrochimique (12).

**21.** Procédé suivant la revendication 19, **caractérisé en ce que** de l'énergie sous forme de chaleur ($\Delta$) et/ou de rayonnement (hv) est continuellement apportée au compartiment étanche au gaz (10), afin de maintenir un état d'équilibre déterminé.

**22.** Procédé suivant une des revendications 19 à 21, **caractérisé en ce que** de la bromure d'hydrogène (HBr) ou de l'iodure d'hydrogène (HI) sont utilisées comme hydracide (HX).

**23.** Procédé suivant une des revendications 19 à 22, **caractérisé en ce que** de l'hydracide (HX), produit dans l'électrolyte (18), passe de celui-ci au compartiment étanche au gaz (10), parce qu'il n'est pas soluble dans l'électrolyte (18).

**24.** Procédé suivant une des revendications 19 à 23, **caractérisé en ce qu'**un récipient résistant aux halogènes est utilisé comme compartiment étanche au gaz (10), par l'intermédiaire des parois duquel de l'énergie calorifique et/ou de l'énergie rayonnante ($\Delta$, hv) est apportée.

**25.** Procédé suivant la revendication 24, **caractérisé en ce que** le récipient est composé d'un couvercle (22) transparent au rayonnement et calorifuge et d'un fond (24), qui laisse passer la chaleur, l'apport d'énergie rayonnante (hv) passant principalement par le couvercle (22) et l'apport d'énergie calorifique passant par le fond (24).

**26.** Procédé suivant la revendication 24 ou 25, **caractérisé en ce que** l'entourage du récipient est conçu, au moyen d'une construction, de manière à provoquer une accumulation de chaleur.

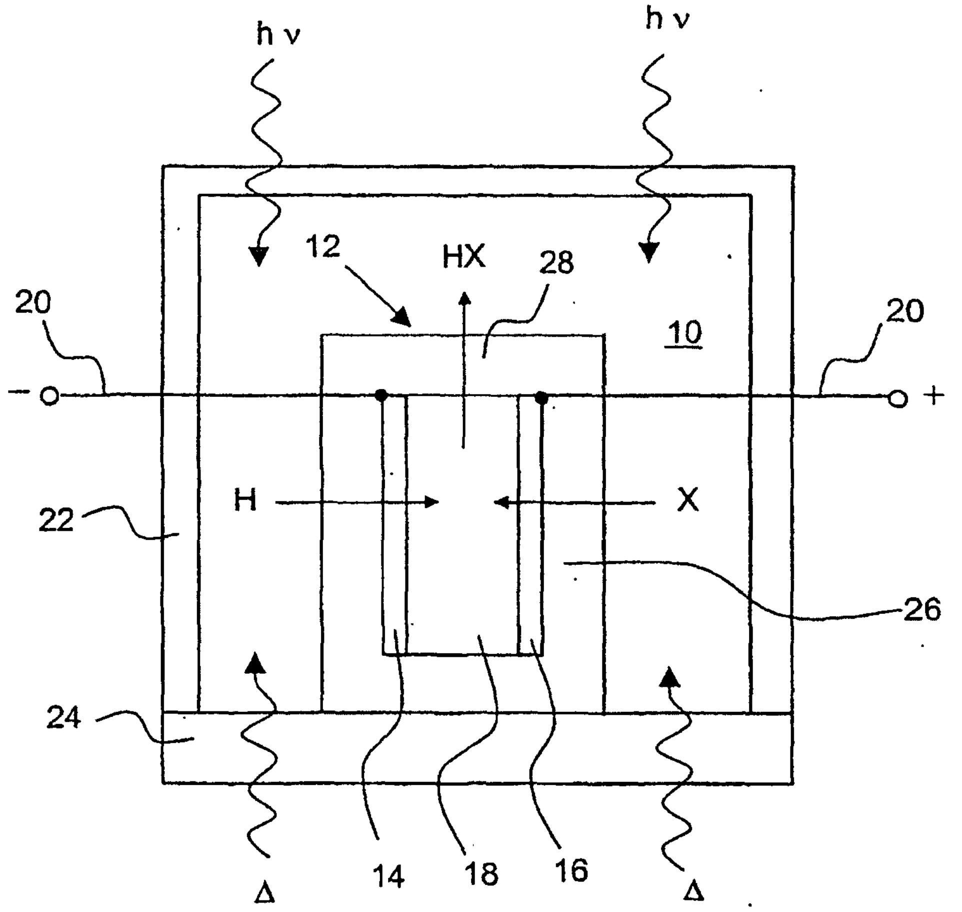


Fig. 1

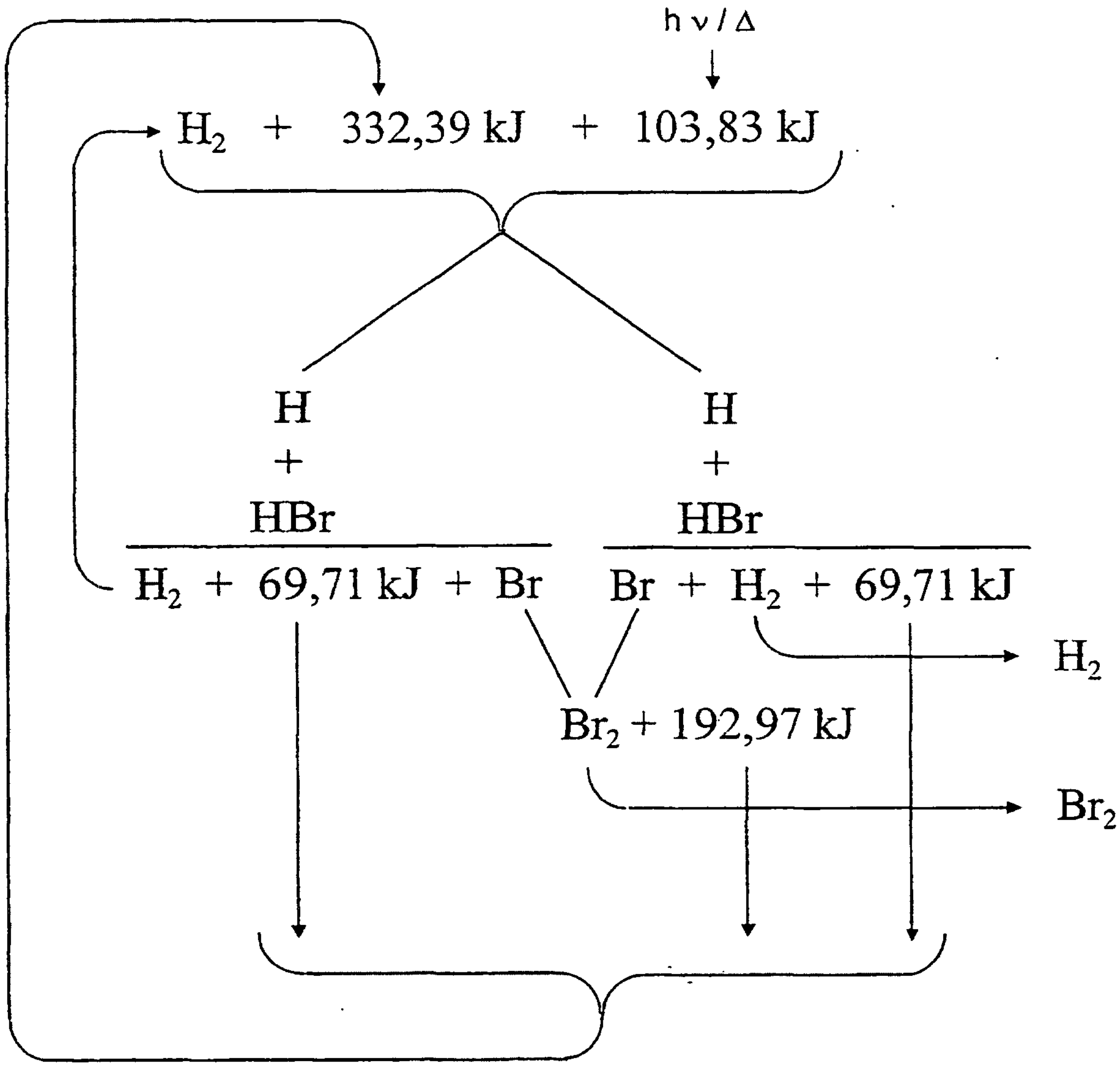
h ν / Δ
H2 + 332,39 kJ + 103,83 kJ
H
+
HBr
H
+
HBr
H2 + 69,71 kJ + Br
Br + H2 + 69,71 kJ
H2
Br2 + 192,97 kJ
Br2

Fig. 2

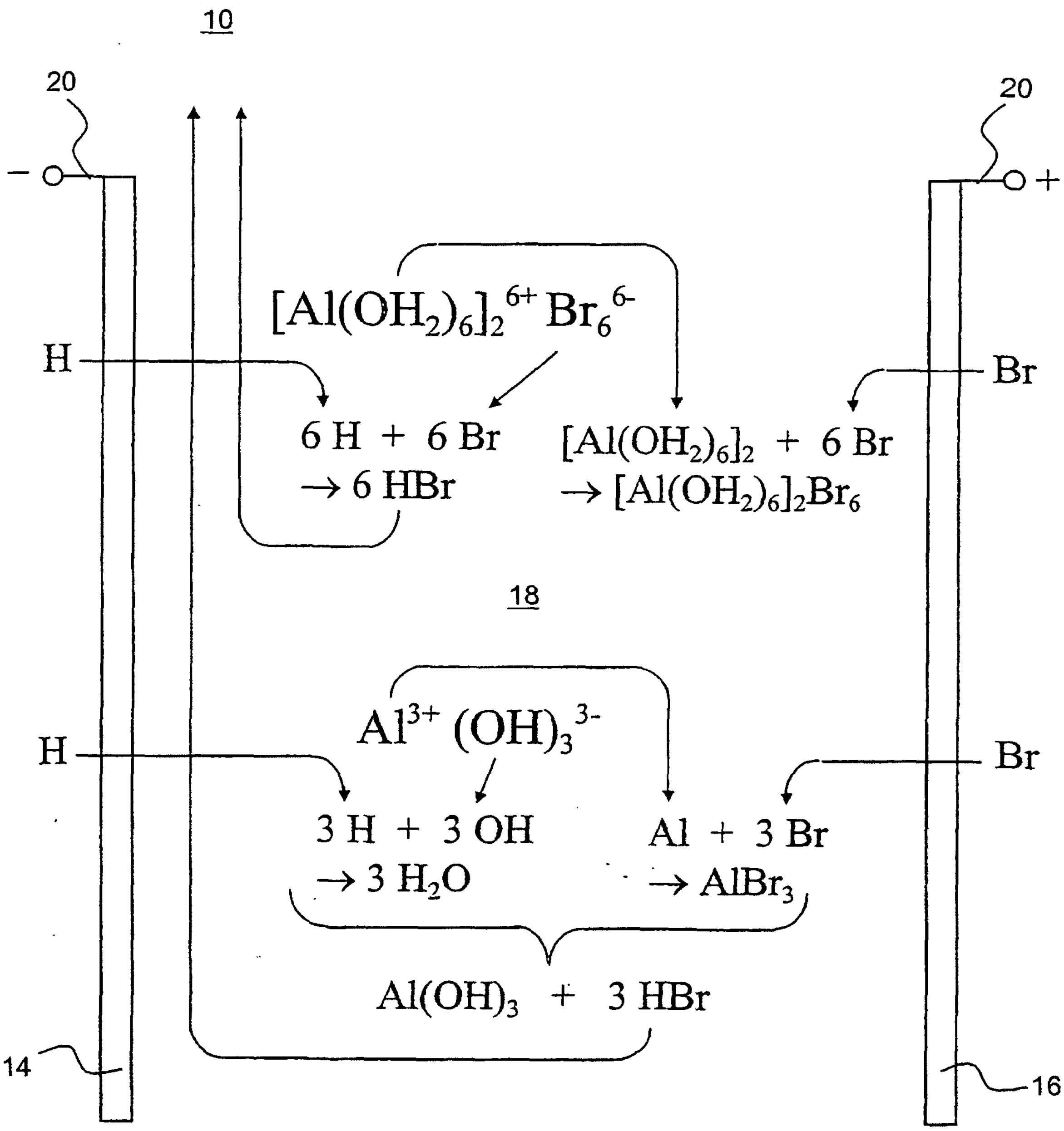
10
20
20
−
+
$[Al(OH_2)_6]_2^{6+} Br_6^{6-}$
H
Br
$6 H + 6 Br \rightarrow 6 HBr$
$[Al(OH_2)_6]_2 + 6 Br \rightarrow [Al(OH_2)_6]_2Br_6$
18
$Al^{3+} (OH)_3^{3-}$
H
Br
$3 H + 3 OH \rightarrow 3 H_2O$
$Al + 3 Br \rightarrow AlBr_3$
$Al(OH)_3 + 3 HBr$
14
16

Fig. 3